Europäisches Patentamt

European Patent Office

Office européen des brevets

(11) Veröffentlichungsnummer : **0 135 807**
**B1**

(12) EUROPÄISCHE PATENTSCHRIFT

(45) Veröffentlichungstag der Patentschrift :
02.12.87

(21) Anmeldenummer : 84110033.2

(22) Anmeldetag : 23.08.84

(51) Int. Cl.⁴ : **B 60 G 11/16**, F 16 F 1/12,
B 60 G 7/04

(54) Einrichtung zur Verbindung einer Schraubendruckfeder mit dem Lenker einer Radaufhängung für Kraftfahrzeuge.

(30) Priorität : 13.09.83 DE 3333002
07.04.84 DE 3413265

(43) Veröffentlichungstag der Anmeldung :
03.04.85 Patentblatt 85/14

(45) Bekanntmachung des Hinweises auf die Patenterteilung : 02.12.87 Patentblatt 87/49

(84) Benannte Vertragsstaaten :
AT BE DE FR GB IT NL SE

(56) Entgegenhaltungen :
DE-C- 731 277
FR-A- 1 112 895
FR-A- 1 544 706
US-A- 2 175 405
PATENTS ABSTRACTS OF JAPAN, Band 5, Nr. 119
(M-81)(791), 31. Juli 1981

(73) Patentinhaber : Gebr. Ahle GmbH & Co.
D-5253 Lindlar 2 (DE)

(72) Erfinder : Borlinghaus, Artur
Espenweg 19
D-5270 Gummersbach-Berghausen (DE)

(74) Vertreter : Feder, Heinz, Dr. et al
Dominikanerstrasse 37
D-4000 Düsseldorf 11 (DE)

## Beschreibung

Gegenstand der Erfindung ist eine Einrichtung zur Verbindung einer Schraubendruckfeder mit dem Lenker einer Radaufhängung für Kraftfahrzeuge.

Es sind Radaufhängungen für Kraftfahrzeuge bekannt, bei denen eine Schraubendruckfeder, z. B. eine Zylinderfeder, sich mit einem Ende am Chassis abstützt, während das andere Federende auf dem Lenker aufliegt. Eine solche Ausbildung einer Radaufhängung hat eine Reihe von Nachteilen, die umso stärker ins Gewicht fallen, je kürzer der Lenker ist, d. h. je geringer der Abstand zwischen dem Drehpunkt des Lenkers und dem Aufsatzpunkt der Schraubendruckfeder ist. Da im modernen Kraftfahrzeugbau die Tendenz besteht, mit kurzen Lenkern zu arbeiten, können zwischen dem Lenker und der Auflagefläche der Schraubendruckfeder am Chassis erhebliche Winkel auftreten, was diese Nachteile verstärkt zur Geltung bringt. Wie weiter unten anhand einer Zeichnung erläutert, erfährt bei den bekannten Radaufhängungen die Schraubendruckfeder und insbesondere die Endwindung der Schraubendruckfeder, die auf dem Lenker aufliegt, eine zusätzliche Biegebeanspruchung, welche die Lebensdauer einschränkt, bzw. wenn man durch entsprechende Dimensionierung diese Biegebeanspruchung reduziert, zu einer Erhöhung des Werkstoffgewichtes der Feder führt. Die zusätzliche Biegebeanspruchung wächst mit dem Winkel, den der Lenker im ein- und ausgefederten Zustand mit der Auflagefläche der Feder am Chassis einschließt.

Weiterhin führt diese Ausbildung dazu, daß das auf dem Lenker aufliegende Federende im ausgefederten Zustand auf der Seite, die dem Lenkerdrehpunkt abgewandt ist, vom Lenker abhebt, was dazu führen kann, daß die Feder keine ausreichende Führung auf dem Federsitz am Lenker mehr aufweist.

Da bei Schraubendruckfedern der Kraftmittelpunkt im allgemeinen nicht zentrisch liegt und sich zudem bei Belastung ändert, können sich unter den oben beschriebenen Verhältnissen Veränderungen der resultierenden Kennlinie ergeben. Dies hat zur Folge, daß sich je nach der Höhe der Belastung und dem Grad der Ausfederung das Übersetzungsverhältnis zwischen Feder und Rad und damit das Federungsverhalten am Rad zusätzlich und in nicht beabsichtigter Weise ändern.

Schließlich besteht bei den bekannten Einrichtungen die Gefahr, daß der Oberflächenschutz auf der Endwindung der Schraubendruckfeder, die auf dem Lenker aufliegt, durch Reiben der Windung auf dem Lenker zerstört wird. Infolgedessen korrodiert das Ende der Feder und kann vorzeitig brechen. Durch eine Unterlage aus Zink kann dieser Vorgang verzögert, aber nicht vollständig aufgehalten werden.

Die Erfindung geht aus von einer Einrichtung zur Verbindung einer Schraubendruckfeder mit dem Lenker einer Radaufhängung für Kraftfahrzeuge mit den Merkmalen aus dem Oberbegriff des Patentanspruchs 1.

Eine derartige Einrichtung ist beispielsweise in DE-C-731 277 beschrieben. Bei der bekannten Einrichtung stützt sich eine zylindrische Schraubendruckfeder auf einem Federteller ab, dessen Unterseite sich mit einer konkaven Oberfläche auf einem Stützelement mit kugeliger Oberfläche abstützt, das mit dem Lenker fest verbunden ist. Diese bekannte Einrichtung hat den Nachteil, daß bei dieser Anordnung der Kraftmittelpunkt veränderlich ist und sich daher Veränderungen der resultierenden Kennlinie ergeben können. Weiterhin benötigt die bekannte Ausführungsform einen hohen Werkstoffaufwand, da die Schraubendruckfeder am lenkerseitigen Ende eine tote Endwindung aufweist.

Die der Erfindung zugrunde liegende Aufgabe bestand darin, eine Einrichtung der oben erwähnten Art zu schaffen, bei der bei außerordentlich geringem Werkstoffaufwand eine Verzerrung der Kennlinie durch veränderlichen Kraftmittelpunkt vermieden wird, der Kraftmittelpunkt bei allen Belastungszuständen also konstant ist.

Die Lösung dieser Aufgabe geschieht erfindungsgemäß mit den Merkmalen aus dem kennzeichnenden Teil des Patentanspruchs 1.

Zahlreiche vorteilhafte Ausführungsformen der erfindungsgemäßen Einrichtung sind Gegenstand der Unteransprüche und in den weiter unten anhand der Zeichnungen erläuterten Ausführungsbeispielen im Detail beschrieben.

Schraubendruckfedern, bei denen der Federdraht an einem Ende axial aus dem Ende der Feder herausgeführt ist, sind an sich bekannt. In der US-PS 1 423 894 ist die Befestigung der Stoßstange am Chassis eines Kraftfahrzeuges beschrieben, bei der eine derartige Feder verwendet wird. Die bekannte Feder ist aber aus rein befestigungstechnischen Gründen in dieser Weise ausgebildet.

Ihre Anwendung erfolgt nicht an einer Einrichtung zur Verbindung einer Schraubendruckfeder mit dem Lenker einer Radaufhängung und die der vorliegenden Erfindung zugrunde liegende Aufgabe ist bei der bekannten Anordnung weder gestellt noch gelöst.

In der US-A-2 175 405 ist eine schwingungsdämpfende Einrichtung beschrieben. Bei einer Ausführungsform dieser Einrichtung stützt sich eine kegelstumpfförmige Feder, bei der der Federdraht am Ende mit kleinstem Windungsdurchmesser axial aus der Schraubendruckfeder herausgeführt ist mit dem herausgeführten Ende in einer konischen Vertiefung eines Legerelementes ab.

Die ganze Einrichtung dient in erster Linie zur Aufhängung von Meßinstrumenten beispielsweise am Instrumentenbrett eines Flugzeuges und soll verhindern, daß sich Schwingungen auf das Meßinstrument übertragen. Es werden also durch diese Einrichtung nur sehr geringe Kräfte übertragen und es finden auch keine nennenswerten Schwenkbewegungen zwischen den sich über die Schraubendruckfeder abstützenden Teilen statt.

Die erfindungsgemäße Einrichtung mit axial aus dem Ende der Schraubendruckfeder herausgeführtem Ende des Federdrahtes löst die obengenannte Aufgabe in besonders vorteilhafter Weise, wobei einerseits die zusätzlichen Biegespannungen an der Schraubendruckfeder vermieden werden und zusätzlich erreicht wird, daß eine Verzerrung der Kennlinie durch veränderlichen Kraftmittelpunkt vermieden wird und eine erhebliche Werkstoffersparnis erreicht wird und keine zusätzlichen Maßnahmen zur Verhinderung der Beschädigung des Oberflächenschutzes erforderlich sind.

Selbstverständlich kann bei einer derartigen Einrichtung auch das dem Chassis des Fahrzeuges zugewandte Ende der Schraubendruckfeder ein axial aus der Feder herausgeführtes Ende aufweisen. Bei einer derartigen Ausführung ohne Federteller wird eine noch größere Werkstoffeinsparung von bis zu 30 % erreicht.

Das gemäß dem Grundgedanken der Erfindung zwischen der Schraubendruckfeder und dem Lenker eingeschaltete Gelenk kann so ausgebildet sein, daß am Lenker eine nach oben offene Kugelpfanne oder ähnliche Lagerung angeordnet ist, in der das Stützelement sitzt.

Es sind aber auch Ausführungsformen möglich, bei denen die gelenkartige Verbindung zwischen Schraubendruckfeder und Lenker so ausgebildet ist, daß die Kugelpfanne an der dem Lenker zugewandten Unterseite eines weiteren Stützelements angeordnet ist.

Bei diesen Ausführungsformen wird als zusätzlicher Vorteil erreicht, daß keine Schmutzteilchen von oben in das Lager geraten können, die zu einem erhöhten Verschleiß führen könnten.

Im folgenden werden anhand der beigefügten Zeichnungen Ausführungsbeispiele für eine Einrichtung nach der Erfindung näher erläutert.

In den Zeichnungen zeigen :

Fig. 1   eine Radaufhängung für Kraftfahrzeuge gemäß dem vorausgesetzten Stand der Technik ;

Fig. 2   die Verbindung einer Schraubendruckfeder mit dem Lenker einer Radaufhängung für Kraftfahrzeuge bei einer ersten Ausführungsform der erfindungsgemäßen Einrichtung mit axial herausgeführtem Ende des Federdrahtes in einer teilweise geschnittenen Darstellung ;

Fig. 3   eine andere Ausführungsform der erfindungsgemäßen Einrichtung mit axial herausgeführtem Ende des Federdrahtes ;

Fig. 4   eine Variante der Ausführungsform nach Fig. 3 ;

Fig. 5   eine dritte Ausführungsform der erfindungsgemäßen Einrichtung mit axial herausgeführtem Ende des Federdrahtes ;

Fig. 6   eine Variante der Ausführungsform nach Fig. 5 ;

Fig. 7   die Verbindung einer Schraubendruckfeder mit dem Lenker einer Radaufhängung eines Kraftfahrzeuges bei einer Ausführungsform der Einrichtung nach der Erfindung mit einer an einem weiteren Stützelement angeordneten Kugelpfanne und axial herausgeführtem Ende des Federdrahtes in einer Schnittdarstellung.

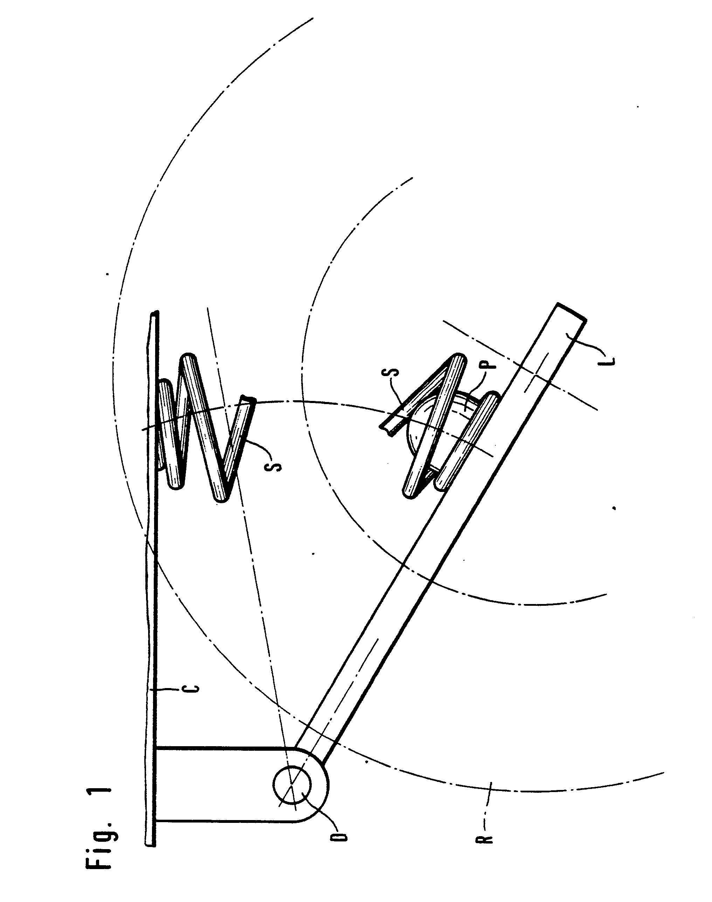

Es soll zunächst anhand von Fig. 1 die der erfindungsgemäßen Einrichtung zugrunde liegende Aufgabestellung noch einmal erläutert werden.

Fig. 1 zeigt schematisch eine Radaufhängung für Kraftfahrzeuge herkömmlicher Bauart. Am Chassis C eines Kraftfahrzeuges ist ein um eine Drehachse D schwenkbarer Lenker L angeordnet. Zwischen der Oberseite des Lenkers L und der Unterseite des Chassis C ist eine Schraubendruckfeder S angeordnet und jeweils mit dem Chassis C und dem Lenker L fest verbunden. Mit dem Lenker L ist weiterhin in nicht eigens dargestellter Weise das Rad R verbunden. Ein innerhalb der Schraubendruckfeder S auf dem Lenker L angeordneter Gummipuffer P dient zum Abfangen besonders harter Stöße, die zum Blockieren der Schraubendruckfeder S führen.

Infolge der Winkelstellung zwischen dem Lenker L und dem Chassis C treten an der Schraubendruckfeder S erhebliche Biegespannungen auf, die um so größer werden je kürzer der Lenker und je größer damit die auftretenden Winkeländerungen sind.

Durch die im folgenden beschriebenen Ausführungsformen der erfindungsgemäßen Einrichtung werden diese zusätzlichen Biegespannungen vermieden.

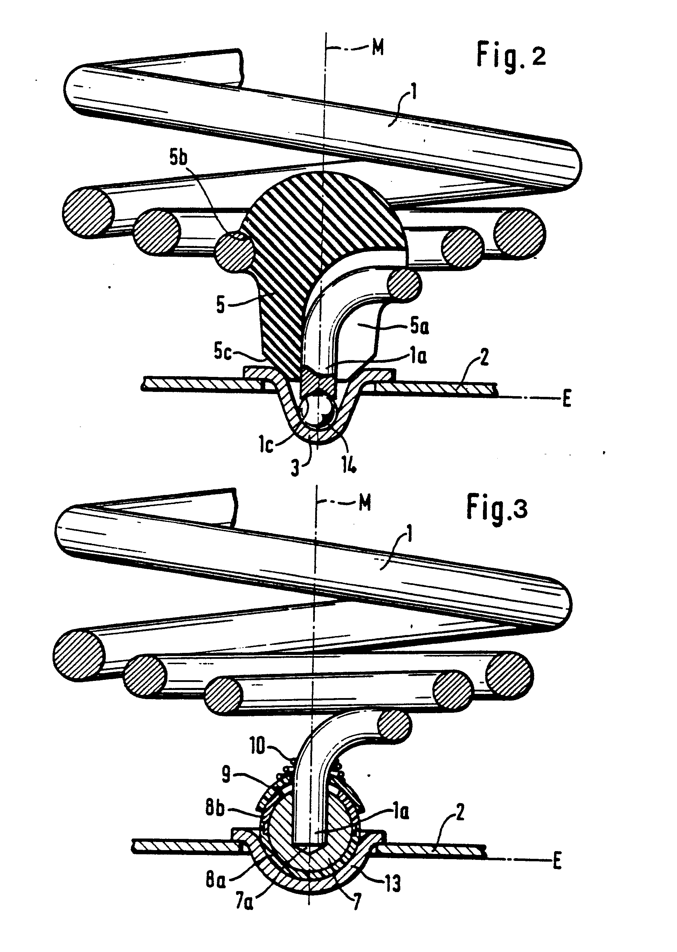

In den Fig. 2 bis 7 sind Einrichtungen zur Verbindung einer Schraubendruckfeder mit dem Lenker einer Radaufhängung für Kraftfahrzeuge dargestellt. Dabei ist jeweils nur das mit dem Lenker verbundene Ende der Schraubendruckfeder dargestellt.

In Fig. 2 ist eine konstruktiv besonders einfache und vorteilhafte Ausführungsform beschrieben.

Wie aus Fig. 2 ersichtlich, ist das dem Lenker 2 zugekehrte Ende einer Schraubendruckfeder 1 spiralig nach innen bis zur Mittelachse M der Schraubendruckfeder geführt. Das Ende des Federdrahtes 1a ist rechtwinklig abgeknickt und auf der Mittelachse M axial aus der Schraubendruckfeder 1 herausgeführt. In eine Öffnung des Lenkers 2 ist eine Lagerschale 3 eingelegt, in die das aus der Schraubendruckfeder 1 herausgeführte Ende 1a des Federdrahtes hineingeführt ist, wo es mit seiner Stirnfläche auf einem Stützelement aufsitzt. Dieses Stützelement besteht aus einer in der Lagerschale 3 angeordneten Stahlkugel 14, auf der das Ende 1a des Federdrahtes aufsitzt, wobei eine Zentrierung dadurch erreicht ist, daß in die Stirnfläche des Federdrahtendes 1a eine hohlkegelförmige Einsenkung 1c eingearbeitet ist.

Selbstverständlich kann als Stützelement auch eine Teilkugel, beispielsweise Halbkugel, verwendet werden, deren konvexe Oberfläche nach oben gerichtet ist.

Die Lagerschale 3 kann selbstverständlich auch in den Lenker 2 integriert sein, in dem beispielsweise eine Vertiefung eingepreßt ist.

Das dem Lenker zugekehrte Ende der Schraubendruckfeder 1 ist außerdem durch ein Pufferelement aus Gummi so hindurchgeführt, daß es an einer Seitenfläche des Pufferelementes eintritt und axial austritt. Der rechtwinklig abgeknickte Abschnitt des Federdrahtendes befindet sich innerhalb des Pufferelementes. Zu diesem Zweck weist das Pufferelement einen seitlichen Schlitz 5a auf, so daß es sich in einfacher Weise in das untere Federende einknöpfen läßt, wobei ein Teil der Endwindung der Feder das Pufferelement in einer entsprechenden Vertiefung 5b formschlüssig umfaßt.

Das Pufferelement 5 dient zum Abfangen besonders heftiger Stöße und seine Ausbildung und Anordnung ist so, daß die gelenkartige Verbindung zwischen Schraubendruckfeder 1 und Lenker 2 nicht beeinträchtigt wird.

Das Pufferelement 5 weist bei dieser Ausführungsform in Richtung auf den Lenker 2 eine Verlängerung auf, die sich mit Schrägflächen 5c an den Außenrändern der Lagerschale 3 abstützt. Auf diese Weise wird erreicht, daß der größte Teil der auf die Federn wirkenden Kräfte nicht auf die gelenkartige Verbindung, sondern direkt auf den Lenker übertragen werden.

Außerdem wird durch das Pufferelement 5 die Lagerschale 3 an ihrer Oberseite gegen das Eindringen von Verunreinigungen abgedichtet.

Bei der in Fig. 2 beschriebenen Ausführungsform wirkt die Abstützung des Federdrahtendes 1a in der Lagerschale 3 über die Kugel 14 gelenkartig und die Schraubendruckfeder 1 ist mit ihrem dem Lenker 2 zugekehrten Ende in der Lagerschale 3 um einen bestimmten Winkel zur Normalen auf die Abstützebene E am Lenker frei schwenkbar gelagert.

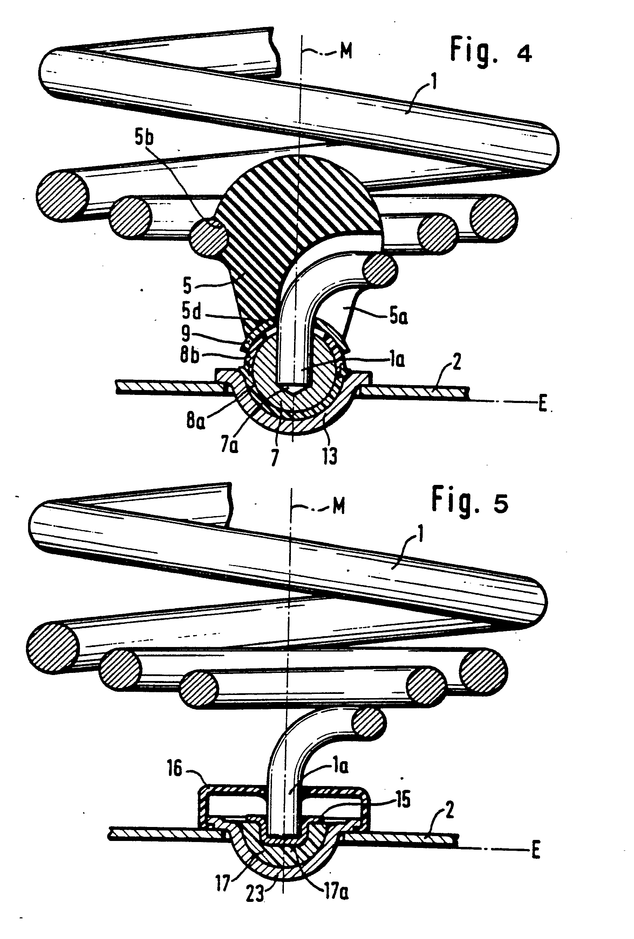

Eine etwas andere Ausbildung der gelenkigen Verbindung zwischen der Schraubenfeder 1 und dem Lenker 2 weist die Ausführungsform nach Fig. 3 und 4 auf. Bei dieser Ausführungsform sind gleiche Teile mit gleichen Bezugsziffern bezeichnet.

Der Federdraht der Schraubendruckfeder 1 ist spiralig nach innen bis zur Mittelachse M geführt, dort rechtwinklig abgeknickt und das Ende des Federdrahtes 1a ist axial aus der Schraubendruckfeder herausgeführt. Auch bei dieser Ausführungsform erfolgt die Verbindung zwischen der Schraubendruckfeder 1 und dem Lenker 2 über ein Kugelgelenk. Hierzu ist das Ende 1a des Federdrahtes in eine Bohrung 7a einer Stahlkugel 7 eingesteckt. Es kann auch in dieser Bohrung zusätzlich durch Verkleben fixiert sein. In eine Öffnung des Lenkers 2 ist eine Kugelpfanne 13 eingesetzt, die aus Stahl bestehen kann und eine Ausfütterung aufweist, die aus zwei Kugelschalen 8a und 8b besteht, die aus Kunststoff bestehen können und von denen die untere Kugelschale 8a in die Kugelpfanne 13 eingesetzt ist. Die obere Kugelschale 8b ist auf die untere Kugelschale 8a derart aufgesetzt, daß sich die Stahlkugel 7 in einer Ausfütterung aus den beiden Kugelschalen 8a und 8b befindet. Durch eine Öffnung an der Oberseite der oberen Kugelschale 8b ist das Ende 1a des Federdrahtes hindurchgeführt. Weiterhin ist die obere Kugelschale 8b an ihrer Oberseite durch eine Schutzkappe 9 aus Kunststoff abgedeckt, die mit dem Ende 1a des Federdrahtes verbunden ist und mittels einer das Ende 1a des Federdrahtes der Schraubendruckfeder umfassenden kleinen Kegelstumpffeder 10 angedrückt wird.

Auch bei dieser Ausführungsform ist das dem Lenker zugekehrte Ende der Schraubendruckfeder 1 am Lenker 2 frei schwenkbar gelagert.

Bei der in Fig. 4 dargestellten Variante der Ausführungsform nach Fig. 3 ist zusätzlich am unteren Ende der Schraubendruckfeder 1 wieder ein Pufferelement 5 aus Gummi vorgesehen, wie es bereits anhand der Fig. 2 beschrieben wurde. Dieses Pufferelement 5 stützt sich mit seiner konkaven Unterseite 5d auf der Schutzkappe 9 ab. Die auf das Pufferelement 5 wirkenden Kräfte werden bei dieser Ausführungsform also vom Kugelgelenk aufgenommen.

Die in den Figuren 3 und 4 dargestellten Ausführungsformen haben den zusätzlichen Vorteil, daß die Schraubendruckfeder 1 mit dem daran angeordneten Stützelement, also der Kugel 7, den beiden Kugelschalen 8a und 8b sowie der Schutzkappe 9 und der kleinen Kegelstumpffeder 10 und gegebenenfalls dem Pufferelement 5, als fertiges zusammenhängendes Bauteil geliefert und eingebaut werden können. Es braucht dann nur noch in den Lenker 2 zusätzlich die Kugelpfanne 13 eingesetzt zu werden. Diese kann aber auch von vornherein in den Lenker integriert sein.

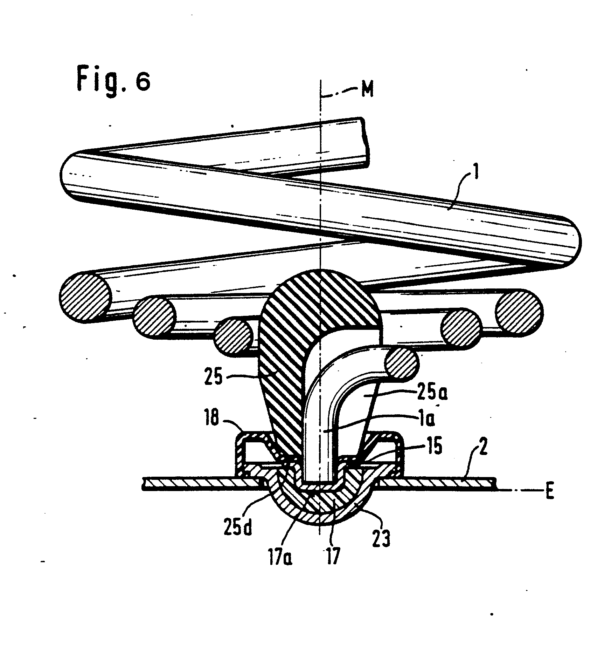

Bei der in den Fig. 5 und 6 dargestellten Ausführungsform erfolgt die Verbindung zwischen der Schraubendruck feder 1 und dem Lenker 2 ebenfalls über ein Kugelgelenk. Dieses Kugelgelenk ist etwas anders ausgebildet als bei den Ausführungsformen nach Fig. 3 und 4. Das axial aus der Schraubendruckfeder 1 herausgeführte Ende 1a des Federdrahtes ist über ein Druckverteilungselement 15, das aus Stahl bestehen kann, in eine Vertiefung 17a einer Halbkugel aus Kunststoff eingesetzt. Die Halbkugel 17 sitzt in einer Kugelpfanne 23 aus Stahl im Lenker 2. Das Kugelgelenk wird an seiner Oberseite abgedeckt durch eine Abdeckkappe 16, beispielsweise aus Gummi, durch die das Ende 1a des Federdrahtes hindurchgeführt ist. Wie in Fig. 6 dargestellt, kann auch bei dieser Ausführungsform ein Pufferelement 25 vorgesehen sein, das sich mit seiner Unterseite 25d auf der in diesem Falle etwas anders ausgebildeten Abdeckkappe 18 abstützt. Das Pufferelement 25 wird durch den seitlichen Schlitz 25a in das Ende der Schraubendruckfeder 1 eingeknöpft.

Wie aus den Fig. 5 und 6 ersichtlich, sind die unteren Ränder der Abdeckkappen 16 und 18 nach innen gebogen und zwischen der Oberfläche des Lenkers 2 und dem Rand der in eine Öffnung des Lenkers eingesetzten Kugelpfanne 23 eingeklemmt. Auf diese Weise ist die Abdeckkappe gut dichtend fixiert. Weiterhin bringt diese Ausbildung den Vorteil, daß die Schraubendruckfeder 1 zusammen mit dem gesamten Kugelgelenk, bestehend aus der Halbkugel 17 und der Kugelpfanne 23, umgeben von der Abdeckkappe 16 bzw. 18 und gegebenenfalls zusammen mit dem Gummipuffer 25 als fertiges Bauteil geliefert und direkt in den Lenker 2 eingesetzt werden kann. Hierbei ist es zweckmäßig, wenn das Ende 1a des Federdrahtes in dem Druckverteilungselement 15, beispielsweise durch Verkleben, fixiert ist.

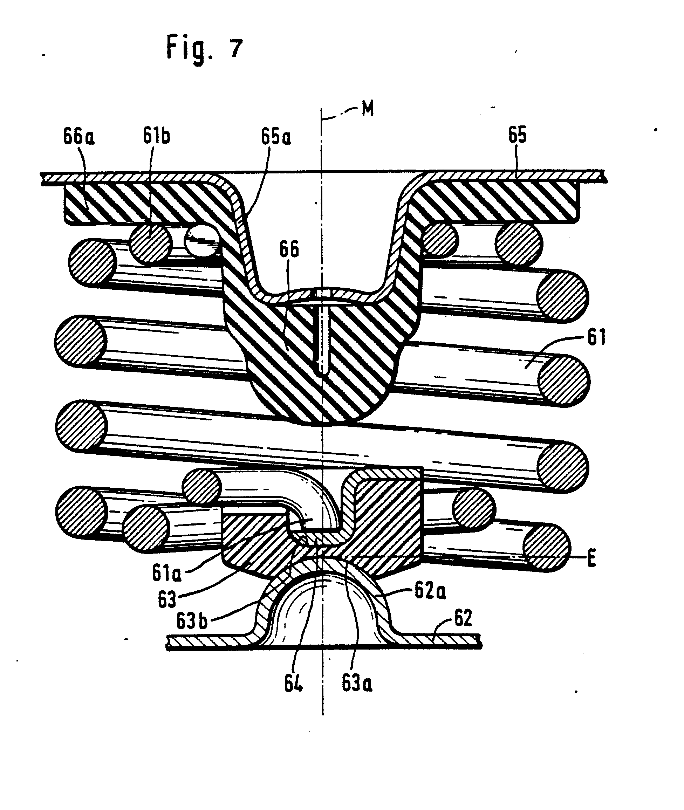

Bei der Einrichtung nach Fig. 7 ist zwischen dem Chassis 65 eines im übrigen nicht dargestellten Kraftfahrzeuges und dem teilweise dargestellten Lenker 62 der Radaufhängung eine Schraubendruckfeder 61 angeordnet, die mit ihrem oberen Ende 61b am Chassis 65 befestigt ist und deren unteres, dem Lenker 62 zugekehrtes Ende spiralig nach innen bis zur Mittelachse M der Schraubendruckfeder geführt ist. Das Ende 61a des Federdrahtes ist rechtwinklig abgebogen und das abgebogene Ende ist axial zur Schraubendruckfeder 61 geführt und in eine Bohrung 63b eines als Kunststoffkörper ausgebildeten weiteren Stützelementes 63 eingesteckt: Dabei ist zur besseren Druckverteilung in die Bohrung 63b des weiteren Stützelementes 63 eine Druckverteilungsschale 64 aus Stahl eingesetzt. Das Ende 61a des Federdrahtes kann in der Druckverteilungsschale durch Verkleben fixiert sein.

An der unteren, dem Lenker 62 zugekehrten Seite des weiteren Stützelementes 63 ist eine Kugelschale 63a angeordnet. In dieser Kugelschale sitzt das mit einer Kugeloberfläche versehene, mit dem Lenker 62 fest verbundene Stützelement 62a. Dieses Stützelement ist bei dem dargestellten Ausführungsbeispiel als in den Lenker 62 eingepreßte, die Lenkeroberfläche halbkugelartig überragende Ausbuchtung ausgebildet. Selbstverständlich kann das Stützelement auch als massives Bauteil auf den Lenker 62 aufgesetzt und mit ihm fest verbunden sein.

Bei der Schraubendruckfeder nach Fig. 7 liegt der Kraftmittelpunkt immer auf der Mittelachse der Feder und die Schraubendruckfeder besitzt am lenkerseitigen Ende keine tote Endwindung. Hierdurch wird eine weitere Werkstoffersparnis erzielt.

Die Ausführungsform nach Fig. 7 hat weiterhin den großen Vorteil, daß einerseits auch bei einer Feder mit axial herausgeführtem Ende des Federdrahtes auf diese Weise ein verminderter spezifischer Druck im Lager erreicht werden kann, da der Durchmesser der Kugel bzw. der Kugelpfanne größer sein kann als der Drahtdurchmesser. Andererseits ist es möglich, eine kleine Bauhöhe der Gesamteinrichtung zu erreichen, indem, wie aus Fig. 7 zu entnehmen, die Höhe des weiteren Stützelementes 63 relativ klein gehalten werden kann und auch des Radius des weiteren Stützelementes 63 kleiner gehalten werden kann als der kleinste wirksame Windungsradius der Schraubendruckfeder. Wie ebenfalls aus Fig. 7 zu entnehmen, kann damit erreicht werden, daß für die Lagerung der Schraubendruckfeder auf dem Lenker kein zusätzlicher Raum erforderlich ist, da bei zunehmender Belastung die äußeren Windungen der Feder bis auf die Höhe der Lager- und Schwenkebene E oder sogar noch tiefer heruntergezogen werden können.

In Fig. 7 ist die Einrichtung mit einer Schraubendruckfeder dargestellt, die als Doppelkegelstumpffeder mit zylindrischem Mittelteil ausgebildet ist. Selbstverständlich kann die Einrichtung auch mit anderen Federformen verwirklicht werden.

Zum Abfangen besonders heftiger Stöße, die zum Blockieren der Schraubendruckfeder führen, dient ein Gummipuffer 66, der am oberen, dem Chassis 65 zugewandten Ende der Schraubendruckfeder 61 auf eine Ausbuchtung 65a im Chassis 65 aufgesetzt ist und dessen Rand 66a gleichzeitig als gummielastisches Auflager für die sich bei zunehmender Belastung zur Erzeugung des progressiven Teils der Kennlinie nacheinander auflegenden Endwindungen 61b am oberen Ende der Schraubendruckfeder 61 dient.

Bei der Ausführungsform nach Fig. 7 kann also anders als bei den weiter oben dargestellten Ausführungsformen mit axial herausgeführtem Federdrahtende die übliche Befestigung des Gummipuffers am oberen Federteller beibehalten werden. Dabei bildet die obere Oberfläche des Stützelementes 63 gleichzeitig eine günstige Auflagefläche für den Gummipuffer 66.

Die Abstützung des Federdrahtendes 61a über die Kugelpfanne 63a auf dem Stützelement 62a wirkt gelenkartig und die Schraubendruckfeder 61 ist mit ihrem dem Lenker 62 zugekehrten Ende um einen bestimmten Winkel zur Normalen auf die Abstützebene E am Lenker frei schwenkar gelagert.

Selbstverständlich kann die Schraubendruckfeder nach Fig. 7 auch als Feder mit linearer Kennlinie ausgebildet sein. In diesem Falle ist der Federteller am oberen, dem Chassis 65 zugewandten Ende der Schraubendruckfeder in seinem Durchmesser kleiner ausgebildet, so daß sich die Endwindungen der Feder nicht auflegen.

Alle Ausführungsformen der erfindungsgemäßen Einrichtung, bei denen zwischen Kugel und Kugelpfanne eine Auskleidung aus Kunststoff angeordnet ist (siehe 8a in Figur 3 und Figur 4) oder bei denen die Kugel oder Halbkugel bzw. die Kugelschale aus Kunststoff besteht (siehe Figur 5 und Figur 6, 63 in Figur 7) haben den Vorteil, daß die jeweils an die Kugelschalenfläche bzw. die Kugeloberfläche angrenzende Fläche des Kunststoffteils mit Vertiefungen oder Bohrungen zur Aufnahme eines Schmiermittels versehen sein kann.

## Patentansprüche

1. Einrichtung zur Verbindung einer Schraubendruckfeder mit dem Lenker einer Radaufhängung für Kraftfahrzeuge, bei der die Abstützung der Schraubendruckfeder (1, 61) auf einem mit dem Lenker (2, 62) fest verbundenen Lager (3, 13, 23) über ein Stützelement (14, 7, 17, 62a) erfolgt, das eine Kugelfläche aufweist derart, daß die Schraubendruckfeder (1, 61) um einen vorgegebenen Winkel zur Normalen auf die Abstützebene (E) am Lenker frei schwenkbar gelagert ist, dadurch gekennzeichnet, daß an dem dem Lenker (2, 62) zugekehrten Ende der Schraubendruckfeder (1, 61) der Federdraht spiralig nach innen bis zur Mittelachse (M) der Schraubendruckfeder (1, 61) geführt ist und das Ende (1a, 61a) des Federdrahtes rechtwinklig abgeknickt und axial aus dem Ende der Schraubendruckfeder (1, 61) herausgeführt ist und als Stützelement eine mit dem Lager oder dem Ende des Federdrahtes verbundene Kugel (14, 7) oder Teilkugel (17, 62a) dient, über die sich das axial herausgeführte Ende des Federdrahtes direkt auf dem Lager abstützt.

2. Einrichtung nach Anspruch 1, dadurch gekennzeichnet, daß die mit dem Ende (1a) des Federdrahtes verbundene Kugel (7) oder Teilkugel (17) in dem als Kugelpfanne ausgebildeten Lager (13, 23) sitzt.

3. Einrichtung nach Anspruch 2, dadurch gekennzeichnet, daß das Stützelement als Vollkugel (7) ausgebildet ist, wobei das axial aus dem Ende der Schraubendruckfeder (1) herausgeführte Ende (1a) des Federdrahtes in eine Bohrung (7a) der Kugel eingesteckt ist.

4. Einrichtung nach Anspruch 3, dadurch gekennzeichnet, daß die Vollkugel (7) aus Stahl besteht und in die Kugelpfanne (13) eine sich nach außen öffnende Kugelschale (8a-8b) aus Kunststoff fest eingesetzt ist, innerhalb der die Vollkugel (7) drehbar angeordnet ist, wobei die Öffnung der Kugelschale mit einer am Ende des Federdrahtes (1a) angeordneten, auf der Außenfläche der Kugelschale (8b) gleitend aufsitzenden Schutzkappe (9) abgedeckt ist.

5. Einrichtung nach Anspruch 2, dadurch gekennzeichnet, daß das Stützelement als Halbkugel (17, 27, 37) aus Kunststoff ausgebildet ist, die in einer Kugelpfanne (23, 33, 43a) aus Stahl sitzt.

6. Einrichtung nach Anspruch 5, dadurch gekennzeichnet, daß zwischen der Halbkugel (17) aus Kunststoff und dem Ende des Federdrahtes (1a) oder des Verbindungsteils eine Druckverteilungsschale (15) aus Stahl angeordnet ist.

7. Einrichtung nach Anspruch 1, dadurch gekennzeichnet, daß als Stützelement eine Kugel (14) oder Halbkugel aus hartem Material dient, auf deren konvexer Oberfläche die mit einer hohlkegelförmigen Einsenkung versehene Stirnfläche (1c) des Endes des Federdrahtes (1a) unmittelbar aufsitzt.

8. Einrichtung nach einem der Ansprüche 1 bis 7, dadurch gekennzeichnet, daß das aus dem Ende der Schraubendruckfeder (1) herausgeführte Ende (1a) des Federdrahtes durch ein Pufferelement (5, 25) aus gummielastischem Material so hindurchgeführt ist, daß es an einer Seitenflanke des Pufferelementes eintritt und axial austritt und sich der rechtwinklig abgeknickte Abschnitt des Federdrahtes innerhalb des Pufferelementes (5, 25) befindet.

9. Einrichtung nach Anspruch 8, dadurch gekennzeichnet, daß das Pufferelement (5) von mindestens einem Teil der Endwindung der Schraubendruckfeder (1) formschlüssig umfaßt ist.

10. Einrichtung nach Anspruch 8 oder 9, dadurch gekennzeichnet, daß das Pufferelement (5, 25) sich an seiner Unterseite (5d, 25d) auf dem Stützelement (7, 17) abstützt.

11. Einrichtung nach Anspruch 8 oder 9, dadurch gekennzeichnet, daß das Pufferelement (5) sich an seiner Unterseite (5c) direkt auf dem Lenker (2) abstützt.

12. Einrichtung nach Anspruch 1, dadurch gekennzeichnet, daß mit dem Ende (61a) des Federdrahtes (61) ein weiteres Stützelement (63) verbunden ist, das an seiner, dem Lenker (62) zugewandten Seite eine Kugelpfanne (63a) aufweist und das am Lenker (62) angeordnete Lager ein mit dem Lenker unverdrehbar verbundenes Stützelement (62a) aufweist, das die Lenkeroberfläche überragt und an der dem weiteren Stützelement (63) zugewandten Seite mit einer Kugeloberfläche versehen ist, mit der es in der Kugelpfanne (63a) des weiteren Stützelementes (63) sitzt.

13. Einrichtung nach Anspruch 12, dadurch gekennzeichnet, daß das weitere Stützelement (63) als Kunststoffkörper ausgebildet ist, der auf einer Kugeloberfläche (62a) aus Stahl aufsitzt und zwischen dem Kunststoffkörper (63) und dem Ende (61a) des Federdrahtes eine Druckverteilungsschale (64) aus Stahl angeordnet ist.

14. Einrichtung nach Anspruch 12 oder 13, dadurch gekennzeichnet, daß in der Schraubendruckfeder (61) an dem mit dem Chassis (65) verbundenen Ende ein axial wirkendes, dem weiteren Stützelement (63) gegenüberliegendes Pufferelement (66) aus gummielastischem Material angeordnet ist.

15. Einrichtung nach einem der Ansprüche 12 bis 14, dadurch gekennzeichnet, daß der Radius des weiteren Stützelementes (63) kleiner ist als der kleinste wirksame Windungsradius der Schraubendruckfeder (61) am dem Stützelement zugewandten Ende.

16. Einrichtung nach einem der Ansprüche 12 bis 15, dadurch gekennzeichnet, daß das Stützelement (62a) als in den Lenker (62) eingepreßte, diesen im wesentlichen halbkugelförmig überragende Ausbuchtung ausgebildet ist.

17. Einrichtung nach einem der Ansprüche 12 bis 15, dadurch gekennzeichnet, daß das Stützelement als in eine Einbuchtung des Lenkers einsetzbares zapfenartiges, mit einem nach außen ragenden halbkugelförmigen Ende versehenes Bauteil ausgebildet ist.

**Claims**

1. Device for connecting a helical compression spring to the arm of a wheel suspension for motor vehicles, in which the helical compression spring (1, 61) is supported on a bearing (3, 13, 23) connected firmly to the arm (2, 62), via a supporting element (14, 7, 17, 62a) which has a spherical face, so that the helical compression spring (1, 61) is mounted on the arm so as to be freely pivotable through a predetermined angle relative to the perpendicular to the supporting plane (E), characterized in that, at the end of the helical compression spring (1, 61) facing the arm (2, 62), the spring wire is guided spirally inwards up to the centre axis (M) of the helical compression spring (1, 61), and the end (1a, 61a) of the spring wire is bent at right angles and guided axially out of the end of the helical compression spring (1, 61), and the supporting element used is a ball (14, 7) or part ball (17, 62a) which is connected to the bearing or to the end of the spring wire and via which the spring-wire end guided out axially is supported directly on the bearing.

2. Device according to Claim 1, characterized in that the ball (7) or part ball (17) connected to the end (1a) of the spring wire rests in the bearing (13, 23) designed as a ball cup.

3. Device according to Claim 2, characterized in that the supporting element is designed as a complete ball (7), and the spring-wire end (1a) guided axially out of the end of the helical compression spring (1) is inserted into a bore (7a) in the ball.

4. Device according to Claim 3, characterized in that the complete ball (7) is made of steel, and inserted firmly into the ball cup (13) is a plastic ball shell (8a-8b) which opens outwards and within which the complete ball (7) is arranged rotatably, the orifice in the ball shell being covered by means of a protective cap (9) arranged at the end of the spring wire (1a) and resting on the outer face of the ball shell (8b) in a sliding manner.

5. Device according to Claim 2, characterized in that the supporting element is designed as a plastic hemisphere (17, 27, 37) which rests in a ball cup (23, 33, 43a) made of steel.

6. Device according to Claim 5, characterized in that a pressure distribution shell (15) made of steel is arranged between the plastic hemisphere (17) and the end of the spring wire (1a) or of the connecting part.

7. Device according to Claim 1, characterized in that the supporting element used is a ball (14) or hemisphere which is made of hard material and on the convex surface of which the end face (1c) of the end of the spring wire (1a) rests directly, this end face (1c) being provided a hollow-conical depression.

8. Device according to one of Claims 1 to 7, characterized in that the end (1a) of the spring wire guided out of the end of the helical compression spring (1) is guided through a buffer element (5, 25) made of elastomeric material, in such a way that it enters on a side flank of the buffer element and comes out axially and the portion of the spring wire bends at right angles is located inside the buffer element (5, 25).

9. Device according to Claim 8, characterized in that the buffer element (5) is surrounded positively by at least part of the end turn of the helical compression spring (1).

10. Device according to Claim 8 or 9, characterized in that the buffer element (5, 25) is supported, on its underside (5d, 25d), on the supporting element (7, 17).

11. Device according to Claim 8 or 9, characterized in that the buffer element (5) is supported, on its underside (5c) directly on the arm (2).

12. Device according to Claim 1, characterized in that connected to the end (61a) of the spring wire (61) is a further supporting element (63) which has a ball cup (63a) on its side facing the arm (62), and the bearing arranged on the arm (62) has a supporting element (62a) which is connected non-rotatably to the arm and projects above the arm surface, and which is provided, on the side facing the further supporting element (63), with a spherical surface by means of which it rests in the ball cup (63a) of the further supporting element (63).

13. Device according to Claim 12, characterized in that the further supporting element (63) is designed as a plastic body which rests on a spherical surface (62a) made of steel, and a pressure distribution shell (64) made of steel is arranged between the plastic body (63) and the end (61a) of the spring wire.

14. Device according to Claim 12 or 13, characterized in that an axially acting buffer element (66) made of elastomeric material and located opposite the further supporting element (63) is arranged in the helical compression spring (61) at the end connected to the chassis (65).

15. Device according to one of Claims 12 to 14, characterized in that the radius of the further supporting element (63) is smaller than the minimum effective turn radius of the helical compression spring (61) at the end facing the supporting element.

16. Device according to one of Claims 12 to 15, characterized in that the supporting element (62a) is designed as a bulge which is pressed into the arm (62) and which projects above this essentially hemispherically.

17. Device according to one of Claims 12 to 15, characterized in that the supporting element is designed as a stud-like component which can be inserted into a recess in the arm and which is equipped with a hemispherical end projecting outwards.

## Revendications

1. Dispositif pour assurer la jonction d'un ressort hélicoïdal de compression avec la barre de direction d'une suspension de roue pour véhicules automobiles dans lequel le ressort hélicoïdal de compression (1, 61) repose sur un coussinet (3, 13, 23) fixé rigidement à la barre de direction (2, 62) par l'intermédiaire d'un élément d'appui (14, 7, 17, 62a), présentant une surface sphérique de façon à ce que le ressort hélicoïdal de compression (1, 61) puisse pivoter librement suivant un angle prédéterminé par rapport à la normale sur le plan d'appui (E) de la barre de direction, caractérisé en ce que, à l'extrémité du ressort hélicoïdal de compression (1, 61) tourné vers la barre de direction (2, 62), le fil de ressort est amené en spirale vers l'intérieur jusqu'à l'axe central (M) du ressort hélicoïdal de compression (1, 61) et que l'extrémité (1a, 61a) du fil de ressort est repliée à angle droit et est amenée axialement hors de l'extrémité du ressort hélicoïdal de compression (1, 61) et que l'élément de support est constitué par une bille (14, 7) ou une partie de bille (17, 62a) relié au palier ou à l'extrémité du fil de ressort (B) par l'intermédiaire de laquelle l'extrémité du fil de ressort sortant axialement prend directement appui sur le palier.

2. Dispositif selon la revendication 1, caractérisé en ce que la bille (7) ou la partie de bille (17) reliée à l'extrémité (1a) du fil de ressort repose dans le palier (13, 23) constitué en forme de palier sphérique.

3. Dispositif selon la revendication 2, caractérisé en ce que l'élément de support est constitué par une bille pleine (7) tandis que l'extrémité (1a) du fil de ressort sortant axialement de l'extrémité du ressort hélicoïdal de compression (1) est inséré dans un alésage (7a) de la bille.

· 4. Dispositif selon la revendication 3, caractérisé en ce que la bille pleine (7) est en acier et que le coussinet sphérique (13) est un coussinet sphérique ouvert vers l'extérieur (8a-8b), en matière plastique et à montage fixe et à l'intérieur duquel la bille pleine (7) peut pivoter, tandis que l'orifice du coussinet sphérique est recouverte par une coiffe de protection (9) reposant à glissement sur la surface extérieure du coussinet sphérique (8b) et disposée à l'extrémité du ressort (1a).

5. Dispositif selon la revendication 2, caractérisé en ce que l'élément de support est constitué par un hémisphère (17, 27, 37) en matière plastique qui repose dans un coussinet sphérique en acier (23, 33, 43a).

6. Dispositif selon la revendication 5, caractérisé en ce qu'un coussinet de répartition de pression (15) en acier est disposé entre l'hémisphère (17) en matière plastique et l'extrémité du fil de ressort (1a) ou la pièce de jonction.

7. Dispositif selon la revendication 1, caractérisé en ce que l'élément de support est constitué par une bille (14) ou un hémisphère en matériau dur sur la surface convexe de laquelle repose directement la surface frontale (1c) pourvue d'un renfoncement en forme de cône creux de l'extrémité du fil de ressort (1a).

8. Dispositif selon l'une des revendications 1 à 7, caractérisé en ce que l'extrémité (1a) du fil de ressort sortant de l'extrémité du ressort hélicoïdal de compression (1) est amené à travers un élément tampon (5, 25) en matériau élastique à base de caoutchouc et en ce que il pénètre par une face latérale de l'élément tampon et en sort axialement et que la section du fil de ressort replié à angle droit se trouve à l'intérieur de l'élément tampon (5, 25).

9. Dispositif selon la revendication 8, caractérisé en ce que l'élément tampon (5) contient exactement au moins une partie de la spire terminale du ressort hélicoïdal de compression (1).

10. Dispositif selon les revendications 8 ou 9, caractérisé en ce que l'élément tampon (5, 25) prend appui par sa face inférieure (5d, 25d) sur l'élément de support (7, 17).

11. Dispositif selon les revendications 8 ou 9, caractérisé en ce que l'élément tampon (5) repose directement sur la barre de direction (2) par sa face inférieure (5c).

12. Dispositif selon la revendication 1, caractérisé en ce qu'un autre élément de support (63) est relié à l'extrémité (61a) du fil de ressort (61) et présente sur son côté tourné vers la barre de direction (62) un coussinet sphérique (63a), tandis que le coussinet monté sur la barre de direction (62) présente un élément de support (62a) monté sans possibilité de rotation sur la barre de direction, cet élément de support dépassant la surface de la barre de direction et étant pourvu d'une surface sphérique sur sa face tournée vers l'autre élément de support (63), cette surface sphérique supportant le coussinet sphérique (63a) de l'autre élément de support (63).

13. Dispositif selon la revendication 12, caractérisé en ce que l'autre élément de support (63) est constitué par un corps en matière plastique qui repose sur une surface sphérique (62a) en acier et qu'un coussinet de répartition de pression (64) en acier est disposé entre le corps en matière plastique (63) et l'extrémité (61a) du fil de ressort.

14. Dispositif selon les revendications 12 ou 13, caractérisé en ce qu'un élément tampon (66) en matériau élastique à base de caoutchouc est disposé dans le ressort hélicoïdal de compression (61) à l'extrémité reliée au châssis (65), cet élément agissant dans le sens axial et étant opposé à l'autre élément de support (63).

15. Dispositif selon les revendications 12 à 14, caractérisé en ce que le rayon de l'autre élément de support (63) est plus faible que le plus petit rayon efficace de spire du ressort hélicoïdal de compression (61) à l'extrémité tournée vers l'élément de support.

16. Dispositif selon l'une des revendications 12 à 15, caractérisé en ce que l'élément de support (62a) est constitué par une courbure estampée dans la barre de direction (62) et dépassant celle-ci suivant une forme essentiellement hémisphérique.

17. Dispositif selon l'une des revendications 12 à 15, caractérisé en ce que l'élément de support est constitué par un élément constructif en forme de tourillon pourvu d'une extrémité de forme hémisphérique tournée vers l'extérieur et pouvant s'insérer dans un renfoncement de la barre de direction.

Fig. 1

C

D

S

R

S

P

L

0 135 807

Fig. 2

Fig. 3

Fig. 4

Fig. 5

Fig. 6

4

# Fig. 7